# EUROPÄISCHE PATENTSCHRIFT

(11) **EP 1 972 817 B1**
(45) Veröffentlichungstag und Bekanntmachung des Hinweises auf die Patenterteilung: **20.07.2011**
(21) Anmeldenummer: 08004138.7
(22) Anmeldetag: 06.03.2008
(51) Int. Cl.: F16D 13/75, F16D 13/58

(54) **Tellerfederhebelbaugruppe zum Betätigen einer Reibungskupplung mit integriertem Verschleißausgleich sowie selbstnachstellende Reibungskupplung**
Disc spring lever component for actuating friction clutch with integrated wear compensation and self-adjusting friction clutch
Composant de levier de ressort à disque destiné à l'actionnement d'un embrayage à friction à compensation d'usure intégrée et embrayage à friction à repositionnement automatique

(30) Priorität: 22.03.2007 DE 102007013788
(43) Veröffentlichungstag der Anmeldung: 24.09.2008
(73) Patentinhaber: Schaeffler Technologies GmbH & Co. KG, 91074 Herzogenaurach (DE)
(72) Erfinder: Daikeler, René, 77833 Ottersweier-Unzhurst (DE); Meinhard, Rolf, 77815 Bühl (DE)

(56) Entgegenhaltungen:
- EP-A1- 1 568 905
- WO-A1-99/40335
- WO-A1-2006/105750
- WO-A1-2007/128261
- FR-A1- 2 775 040

## Beschreibung

Die Erfindung betrifft eine Tellerfederhebelbaugruppe zum Betätigen einer Reibungskupplung mit integriertem Verschleißausgleich gemäß dem Oberbegriff des Anspruchs 1 sowie eine selbstnachstellende Reibungskupplung mit einer solchen Tellerfederhebelbaugruppe.

Insbesondere bei automatisierten Reibungskupplungen ist eine integrierte Verschleißnachstellung vorteilhaft, mittels der eine Kennlinie, die das übertragbare Kupplungsmoment in Abhängigkeit von der Stellung eines Aktors oder eines Betätigungsgliedes der Kupplung angibt, weitgehend unabhängig von einem Verschleiß der Reibbeläge der Kupplung konstant bleibt.

Bekannt sind Nachstelleinrichtungen mit einer Tellerfederhebelbaugruppe gemäß dem Oberbegriff des Anspruchs 1. Eine bekannte Tellerfederhebelbaugruppe ist auch zum Beispiel im Stand der Technik nach Dokument EP 1 568 905 gezeigt.

Der Erfindung liegt die Aufgabe zugrunde, eine solche Tellerfederhebelbaugruppe dahingehend weiterzubilden, dass sie bei guter Funktionalität einen verminderten Platzbedarf hat.

Diese Aufgabe wird mit einer Tellerfederhebelbaugruppe zum Betätigen einer Reibungskupplung mit integriertem Verschleißausgleich gelöst, welche Tellerfederhebelbaugruppe einen Tellerfederhebel, eine Antriebsfeder und ein Schneckenrad enthält, wobei der Tellerfederhebel einen in Umfangsrichtung durchgehenden, radial äußeren Ringscheibenbereich aufweist, von dem axial einwärts gerichtete Federzungen ausgehen, und die Antriebsfeder einen mit einem mit einem radialen Spalt versehenen Ringteil aufweist, von dem radial einwärts gerichtete Speichen ausgehen, die an den Federzungen befestigt sind, wobei ein an einer Seite des Spaltes befindlicher Endbereich des Ringteils zumindest in Umfangsrichtung relativ zur Antriebsfeder festgelegt ist und das um eine zur Ebene des Tellerfederhebels etwa senkrechte Achse drehbar gelagerte Schneckenrad trägt, das mit einer Umfangsverzahnung ausgebildet ist und eine Schneckenrille aufweist, die geeignet ist, bei einer Verdrehung des Schneckenrades eine Verschleißnachstellung zu bewirken, und der auf der anderen Seite des Spaltes befindliche Endbereich des Ringteils mit einer Klinke versehen ist, die mit der Umfangsverzahnung in in eine Drehbarkeitsrichtung des Schneckenrades bewegungsübertragendem Eingriff ist, und wobei die Anordnung der Antriebsfeder auf dem Tellerfederhebel derart ist, dass sich die Weite des Spaltes bei einer konischen Verformung des Tellerfederhebels ändert, wodurch die Klinke bei einer überschwelligen Verformung des Tellerfederhebels eine Verdrehung des Schneckenrades bewirkt, und wobei Federzungen über zur Seite der Antriebsfeder gewölbte Bereiche in den Ringscheibenbereich übergehen, die Speichen der Antriebsfeder durch zwischen den gewölbten Bereichen der Federzungen ausgebildete Zwischenräume und/oder in den gewölbten Bereichen ausgebildete Aussparungen verlaufen und der Ringteil der Antriebsfeder radial außerhalb der Scheitel der gewölbten Bereiche auf dem Tellerfederhebel aufliegen.

Durch die in Umfangsrichtung der Tellerfederhebelbaugruppe vorhandene Überlappung zwischen den Federzungen des Tellerfederhebels und den Speichen der Antriebsfeder ist der Platzbedarf der erfindungsgemäßen Tellerfederhebelbaugruppe vermindert.

Das Schneckenrad kann vorteilhafter Weise an einem starr mit dem Ringteil verbundenen Haltebauteil gelagert sein, das zumindest in Umfangsrichtung unbeweglich mit dem Tellerfederhebel verbunden ist und an dem das Schneckenrad derart gelagert ist, dass es sich in einer Aussparung der gewölbten Bereiche des Tellerfederhebels befindet.

Mit der vorgenannten Anordnung lässt sich auch das Zahnrad ohne wesentlichen zusätzlichen Platzbedarf an der Tellerfederhebelbaugruppe anbringen. Vorteilhafter Weise überlappt das Zahnrad in Aufsicht auf die Tellerfederhebelbaugruppe den Ringscheibenbereich.

Der Ringscheibenbereich kann radial außen mit Rampenflächen ausgebildet sein.

Der Ringscheibenbereich kann alternativ als ein in Umfangsrichtung Rampenflächen bildender Ring ausgebildet sein.

Die Erfindung bezieht sich weiter auf eine selbstnachstellende Reibungskupplung, die eine Tellerfederhebelbaugruppe mit den vorstehend beschriebenen Merkmalen enthält.

Bei einer solchen erfindungsgemäßen selbstnachstellenden Reibungskupplung liegen vorteilhafter Weise die radial außen am Ringscheibenbereich der Tellerfeder ausgebildeten Rampenflächen an Rampenflächen, die an einem mit einer Anpressplatte der Reibungskupplung verbundenen Zuganker ausgebildet sind, und ist die Schneckenrille des Schneckenrades in Eingriff mit einer Verzahnung, die an einem gehäusefesten Gegenbauteil ausgebildet ist.

Bevorzugt stützt sich der Tellerfederhebel radial innerhalb der Rampenflächen an einem gehäusefesten Gegenlagerbauteil ab.

Die Erfindung wird im Folgenden anhand schematischer Zeichnungen beispielsweise und mit weiteren Einzelheiten erläutert.

In den Figuren stellen dar:
- Fig. 1: einen Prinziphalbschnitt durch eine an sich bekannte Reibungskupplung,
- Fig. 2: ein Funktionsprinzip einer an sich bekannten Verschleißnachstellung,
- Fig. 3: eine Aufsicht auf Teile eine Reibungskupplung mit einem Schneckenrad zur Verschleißnachstellung,
- Fig. 4: einen Schnitt durch die Anordnung gemäß Fig. 4 in der Ebene IV/IV,
- Fig. 5: eine die Teilansicht der Anordnung gemäß Fig. 4, geschnitten längs der Ebene V/V,
- Fig. 6: einen perspektivische Ansicht einer erfindungsgemäßen Tellerfederhebelbaugruppe,
- Fig. 7: eine Schnittansicht der Tellerfederhebelbaugruppe gemäß Fig. 6, geschnitten in der Ebene VII-VII der Fig. 6,
- Fig. 8 und 9: eine alternative Ausführungsform des Tellerfederhebels.

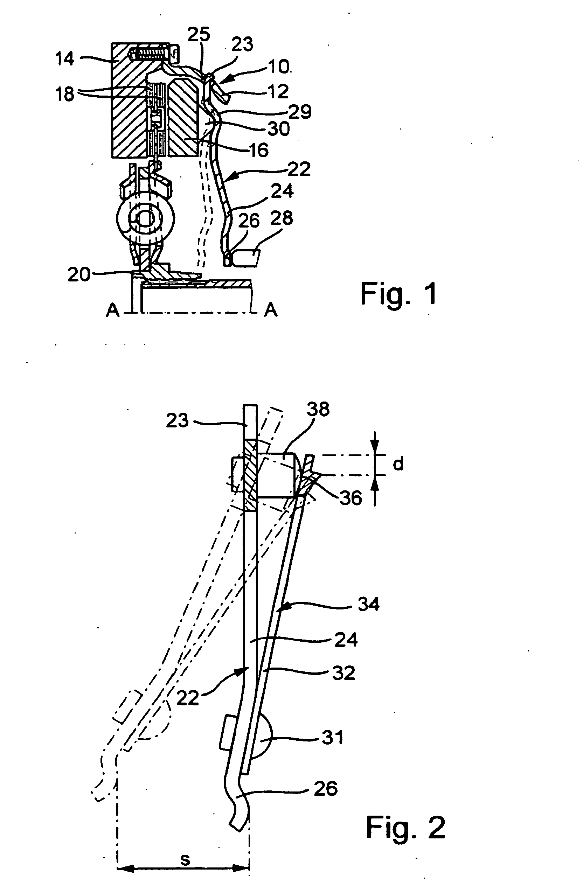

Fig. 1 zeigt einen Halbschnitt durch eine an sich bekannte Reibungskupplung 10 mit der Drehachse A-A.

Die Kupplung enthält einen Deckel bzw. ein Gehäuse 12, der bzw. das starr mit einer Gegendruckplatte 14 und drehfest mit einer Schwungscheibe einer Brennkraftmaschine verbunden ist. Weiter ist eine mit dem Gehäuse 12 drehfest, jedoch axial verschiebbar verbundene Anpressplatte 16 vorgesehen, mittels der Reibbeläge 18 gegen die Gegendruckplatte 14 pressbar sind, welche Reibbeläge an einer Kupplungsscheibe 20 angebracht sind, die drehfest mit einer Welle 21, beispielsweise einer Getriebeeingangswelle, verbunden ist.

Zum axialen Bewegen der Anpressplatte 16 ist ein insgesamt ringscheibenförmiger Tellerfederhebel 22 vorgesehen, der aus einzelnen in Umfangsrichtung nebeneinander angeordneten, radial einwärts gerichteten und radial außen über einen in Umfangsrichtung geschlossenen Ringscheibenbereich 23 miteinander verbundenen Federzungen 24 besteht. Im dargestellten Beispiel stützt sich der Tellerfederhebel 22 an seinem äußeren Umfangsrand 25 an dem Gehäuse 12 ab und ist an seinem inneren Umfangsrand 26 mittels eines Betätigungsglieds 28 axial bewegbar. Das Betätigungsglied 28 enthält beispielsweise ein mit der Achse A-A konzentrisches Ringlager, so dass eine lineare Bewegung eines ortsfesten Aktors in eine lineare Bewegung des inneren Umfangsrands 26 des sich drehenden Tellerfederhebels 22 umsetzbar ist.

Der Tellerfederhebel 22 wirkt über Rampenflächen 29 mit Rampenflächen 30 der Anpressplatte 16 zusammen, wobei die Rampenflächen in Umfangsrichtung mit unterschiedlicher Dicke ausgebildet sind, so dass eine Relativdrehung zwischen der Anpressplatte 16 und dem Tellerfederhebel 22 einen Ausgleich von Verschleiß der Reibbeläge 18 oder sonstigem Verschleiß in Elementen der Kupplung ermöglicht. Gepunktet ist die Stellung des Tellerfederhebels 22 eingezeichnet, in der die Anpressplatte 16 gegen die Reibbeläge 18 gedrückt ist, d.h. die Kupplung geschlossen oder zugedrückt ist. Die mit ausgezogenen Linien dargestellte Stellung des Tellerfederhebels 22 entspricht dem offenen bzw. nicht eingerückten Zustand der Kupplung.

In an sich bekannter Weise kann die Kupplung durch einfache Umkonstruktion als zugedrückte, zugezogene oder aufgedrückte bzw. aufgezogene Kupplung konstruiert sein.

Fig. 2 zeigt das Grundprinzip einer an sich bekannten Verschleißnachstellvorrichtung. Dabei zeigt Fig. 2 einen Halbschnitt durch den Tellerfederhebel 22 mit zugehörigen Bauteilen.

Gemäß Fig. 2 sind die Federzungen 24 des Tellerfederhebels 22 beispielsweise durch Nieten 31 mit Speichen 32 einer insgesamt mit 34 bezeichneten und insgesamt konzentrisch zum Tellerfederhebel angeordneten Antriebsfeder verbunden, die einen äußeren in Umfangsrichtung durch einen in Fig. 2 nicht sichtbaren radialen Zwischenraum bzw. Spalt unterbrochenen Ringteil 36 aufweist, der die Speichen 32 verbindet. Die Antriebsfeder 34 stützt sich an dem Tellerfederhebel 22 über Distanzstücke 38 ab, die beispielsweise mit dem Tellerfederhebel 22 vernietet sind und zu dem Ringteil 36 hin eine ballige Oberfläche aufweisen.

Wenn die Kupplung eingerückt wird, wird der Tellerfederhebel 22 an seinem inneren Umfangsrand 26 um die Strecke s nach links bewegt und schwenkt unter konischer Verformung um eine am Gehäuse 12 (Fig. 1) ausgebildete Gegenlagerung, an der sich der äußere Ringscheibenbereich 23 abstützt, und in einem gewissen Ausmaß um die sich gem. Fig. 1 nach links bewegende Abstützung an der Anpressplatte 16.

Beim Verschwenken des Tellerfederhebels 22 bleibt der Abstand zwischen den Nieten 31 und dem Ringscheibenbereich 23 im Wesentlichen konstant, so dass sich das durch den Tellerfederhebel 22, die Antriebsfeder 34 und das Distanzstück 38 gebildete Dreieck derart verformt, dass sich die Antriebsfeder 34 unter Abgleiten auf dem Distanzstück 38 mit ihrem Ringteil 36 um die Strecke d radial einwärts bewegt. Dadurch verringert sich der Umfang des Ringteils 36.

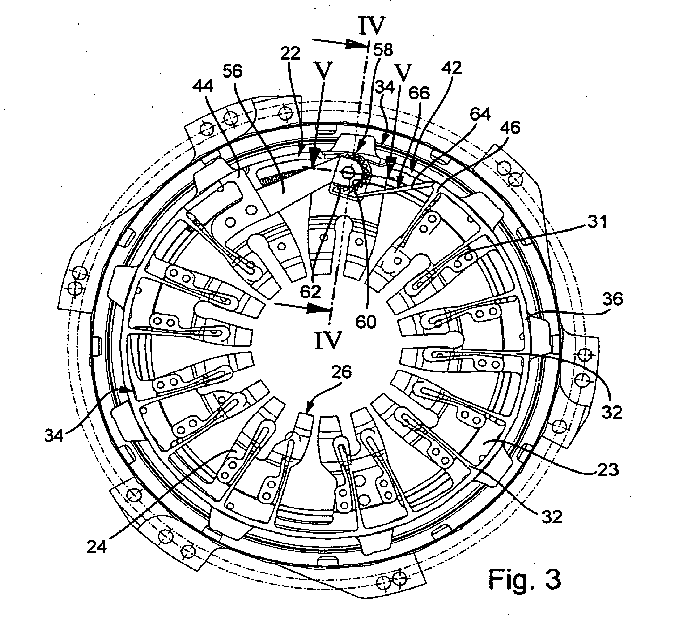

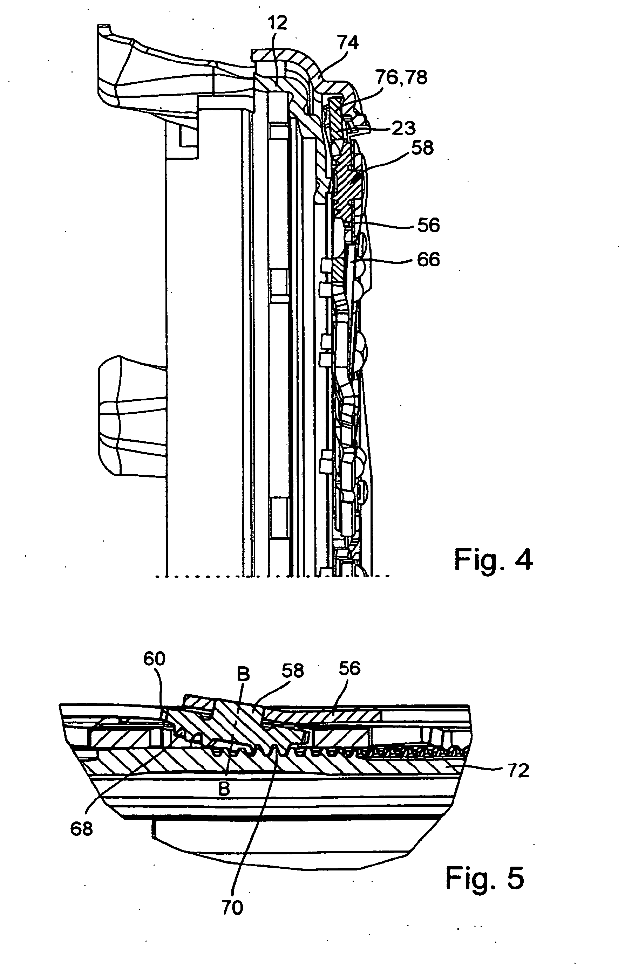

Das geschilderte Grundprinzip lässt sich in unterschiedlicher Weise zur Verschleißnachstellung nutzen. Ein Beispiel wird nachfolgend anhand der Fig. 3 und 5 erläutert:

Fig. 3 zeigt eine Aufsicht auf eine Kupplung bei abgenommenem Zuganker; Fig. 4 zeigt einen Schnitt längs IV-IV der Fig. 3 und Fig. 5 zeigt einen Schnitt längs der Linie V-V der Fig. 3. Sich funktional entsprechende Bauteile sind mit denselben Bezugszeichen belegt wie in Fig. 1 und 2.

Deutlich sichtbar ist der insgesamt mit 22 bezeichnete Tellerfederhebel mit dem in Umfangsrichtung durchgehenden äußeren Ringscheibenbereich, der die radial einwärts vorstehenden Federzungen 24 miteinander verbindet. Auf dem Tellerfederhebel 22 ist die Antriebsfeder 34 insgesamt gleichachsig mit dem Tellerfederhebel 22 angeordnet. Der äußere Ringteil 36 ist in Umfangsrichtung durch einen radialen Zwischenraum bzw. Spalt 42 unterbrochen. Von dem Ringteil 36 gehen radial einwärts gerichtete Speichen 32 aus, die an ihren radial inneren Enden nach außen umgebogen sind und in Laschen enden, die mit den Federzungen 24 vernietet sind.

Mit dem gemäß Fig. 4 links des Spaltes 42 angeordneten Endbereich 44 der Antriebsfeder 34 ist ein Blattfederarm 56 beispielsweise durch Nieten starr verbunden, an dessen freiem Ende ein Schneckenrad 58 drehbar gelagert ist. Das Schneckenrad 58 ist an seinem Umfang mit einer Verzahnung 60 ausgebildet, in die eine Mitnehmerverzahnung 62 eingreift, die am Ende eines Federarms 64 ausgebildet ist, der von dem rechts des Spaltes befindlichen Endbereich 46 des Ringteils 36 der Antriebsfeder 34 vorsteht. Die Mitnehmerverzahnung 62 enthält mindestens einen Zahn und bildet zusammen mit dem Federarm 64 eine Klinke 66, die in einer Richtung sperrt und in die andere Richtung "frei läuft".

Der Federarm 64 ist derart ausgebildet, dass er die Mitnehmerverzahnung 62 in Eingriff in die Umfangsverzahnung 60 drängt. Die Verzahnungen 62 und 60 sind derart geformt, dass im dargestellten Beispiel gemäß Fig. 4 die Mitnehmerverzahnung 62 das Schneckenrad 58 in Gegenuhrzeigerrichtung dreht, jedoch eine Drehung des Schneckenrades 58 in Uhrzeigerrichtung nicht zwangsläufig erfolgt, sondern sich die Verzahnungen dabei überlaufen können.

Wie aus den Fig. 4 und 5 ersichtlich, ist das Schneckenrad 58 an seiner Unterseite mit einer spiralförmig verlaufenden Schneckenrille 68 versehen. Die Achse B-B, um die das Schneckenrad 58 drehbar im Blattfederarm 56 gelagert ist, ist zur Umfangsrichtung derart etwas geneigt, dass nur einer der beiden bezogen auf die Drehachse B-B in Umfangsrichtung liegenden Bereiche der Schneckenrille 68 in eine Gegenverzahnung 70 eingreift, deren Zähne radial gerichtet sind und die in einem mit dem Gehäuse 12 starr verbundenen Bauteil oder am Gehäuse selbst ausgebildet ist. Im Unterschied zur Ausführungsform gemäß Fig. 1 untergreift der Umfangsrand 25 des Tellerfederhebels 22 einen Zuganker 74, der in an sich bekannter Weise eine Grundplatte der Kupplung übergreift und eine gemäß Fig. 5 linksseitig angeordnete Anpressplatte (nicht dargestellt) betätigt. Eine solche Konstruktion ist insbesondere bei Doppellkupplungen, wie sie für Doppellkupplungs- bzw. Parallelschaltgetriebe verwendet werden, vorteilhaft.

Die Funktion der Verschleißnachstelleinrichtung ist folgende:
Es sei angenommen, die Weite des Spaltes 42 bzw. die Länge des äußeren Umfangs der Antriebsfeder 34 nehme bei Bewegung des Tellerfederhebels 22 aus der gepunkteten Stellung der Fig. 1 in die durchgezogene Stellung bzw. zur gezielten Nachstellung der Kupplung über die durchgezogen dargestellte Stellung hinaus nach rechts über ein vorbestimmtes Maß hinaus ab. Wenn dieses Maß bzw. dieser Schwellwert das Modul der Verzahnungen 60, 62 übersteigt, überfährt die Mitnehmerverzahnung 62 die Umfangsverzahnung 60 gemäß Fig. 3 nach links, so dass bei einer anschließenden Rückkehr des Tellerfederhebels in die Stellung gemäß Fig. 1 das Schneckenrad 58 in Gegenuhrzeigerrichtung verdreht wird. Infolge des Eingriffs der Schneckenrille 68 in die Gegenverzahnung 70, wobei dieser Eingriff durch eine entsprechende Vorspannung des Blattfederarms 56 gewährleistet ist, führt dies zu einer Relativverdrehung zwischen dem Tellerfederhebel 22 und dem gehäusefesten Bauteil 72 bzw. dem Gehäuse 12, wodurch sich ein axialer Abstand zwischen dem Umfangsrand 24 und dem Zuganker 74, die sich über nicht dargestellte Rampenflächen 76, 78 aneinander abstützen, im Sinne einer Verschleißnachstellung verändert.

Der Blattfederarm 42, der das Schneckenrad 44 axial in die Gegenverzahnung 54 drängt, überträgt auch das zum Verdrehen notwendige Drehmoment zwischen dem Gehäuse und dem Tellerfederhebel 22.

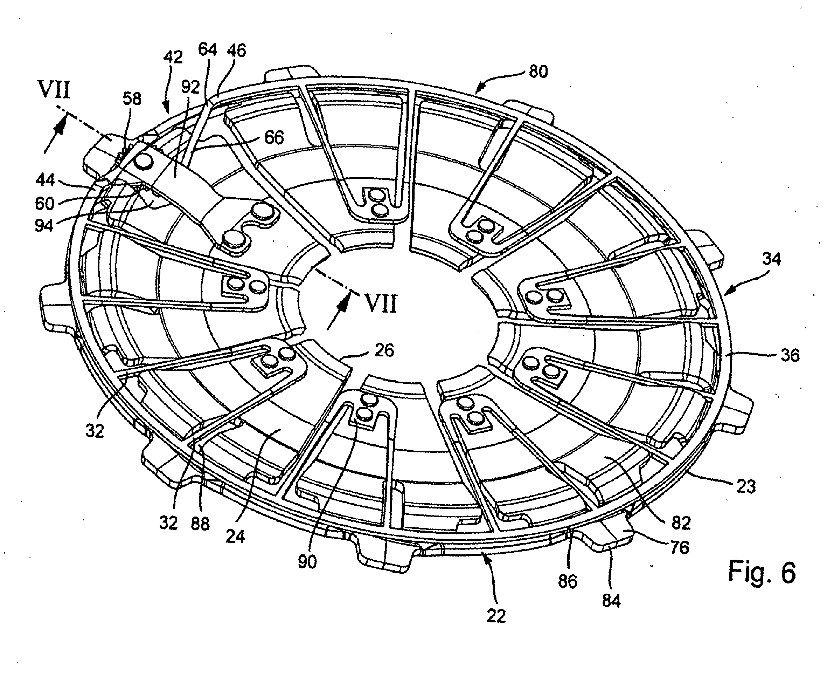

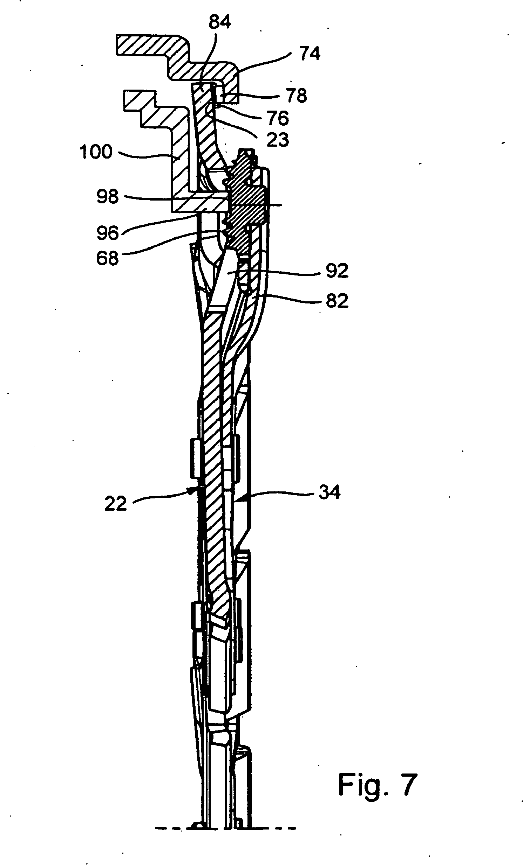

Im Folgenden wird eine erfindungsgemäße Weiterbildung der geschilderten Baugruppe aus Tellerfederhebel, Antriebsfeder und Schneckenrad erläutert, wobei Fig. 6 eine perspektivische Ansicht auf eine Tellerfederhebelbaugruppe 80 darstellt und Fig. 7 einen Schnitt durch die Tellerfederhebelbaugruppe der Fig. 6 in der Ebene VII-VII mit zusätzlichen Kupplungsbauteilen zeigt.

Die Federzungen 24 des Tellerfederhebels 22 gemäß Fig. 6 und 7 sind vom inneren Umfangsrand 26 ausgehend zunächst eben ausgebildet und gehen dann über gemäß Fig. 6 nach oben gewölbte Bereiche 82 in den in seiner radialen Erstreckung verhältnismäßig kleinen Ringscheibenbereich 23 über. Von dem Ringscheibenbereich 23 stehen Ansätze 24 vor, deren Oberseiten als Rampenflächen 76 ausgebildet sind. Dabei ist das entgegen der Uhrzeigerrichtung liegende Ende 86 jedes Ansatzes 84 bzw. jeder Rampenfläche gegenüber der Ebene des Ringscheibenbereichs 23 erhöht.

Der Ringteil 36 der Antriebsfeder 34 liegt auf den erhöhten Enden 86 der Ansätze 84 auf, so dass er von der Ebene des Ringscheibenbereichs 23 bzw. der Rampenflächen 76 einen axialen Abstand hat. Die axiale Richtung ist die Richtung der Achse A'A (Fig. 1), um die sich die Tellerfederhebelbaugruppe 80 im eingebauten Zustand dreht.

Von dem Ringteil 36 stehen Speichen 32 radial einwärts vor und erstrecken sich zunächst zwischen je zwei benachbarten gewölbten Bereichen 82 der Federzungen 24, wobei jeweils eine der Speichen in einem Zwischenraum zwischen den Federzungen verläuft und die andere der Speichen in einer Aussparung 88 aufgenommen ist, die in dem gewölbten Bereich 82 einer Federzunge ausgebildet ist. Die radial einwärtigen Enden jeweils zweier Speichen32 laufen in einer Lasche 90 zusammen, die mit dem flachen Bereich einer jeweiligen Federzunge 24 vernietet ist.

Das Schneckenrad 58 ist an einem laschenartigen Haltebauteil 92 gelagert, das mit dem einen, dem Spalt 42 benachbarten Endbereich 44 des Ringteils 36 starr verbunden ist und an seinem radial inneren Ende mit einer Federzunge beispielsweise durch Nieten fest verbunden ist. Von dem anderen Endbereich 46 des Ringteils 36 geht ähnlich wie bei der Ausführungsform gemäß Fig. 3 der Federarm 64 aus, der die Klinke 66 bildet, die mit der Umfangsverzahnung 60 des Schneckenrades 58 zusammen wirkt.

Das Schneckenrad ist in einer Aussparung 94 aufgenommen, die in dem gewölbten Bereich einer der Federzungen 24 ausgebildet ist, sodass seine Schneckenrille 68 (Fig. 7) für einen Eingriff mit einer in einem Rücken 96 eines kupplungsgehäusefesten Gegenbauteils 98 ausgebildeten Verzahnung 100 freiliegt.

Wie aus den Figuren ersichtlich, ist das Schneckenrad 58 in axialer Richtung gesehen zumindest weitgehend innerhalb der axialen Erstreckung der gewölbten Bereiche 82 aufgenommen, wobei auch das Haltebauteil 92 in seinem das Schneckenrad lagernden Bereich innerhalb der axialen Erstreckung der gewölbten Bereiche 82 angeordnet sein kann, so dass das Schneckenrad und das Haltebauteil 92 die Tellerfederhebelbaugruppe 80 in axialer Richtung nicht oder nur minimal vergrößern. Der mit der Verzahnung 98 ausgebildete Rücken 96 des gehäusefesten Gegenbauteils 100 ragt in die durch die gewölbten Bereiche 82 gebildete Höhlung ein und bildet in dem nicht verzahnten Bereichen ein Gegenlager für den Tellerfederhebel 22, an dem sich der Tellerfederhebel 22 abstützt, wenn der Zuganker 74 unter konischer Verformung des Tellerfederhebels 22 gemäß Fig. 7 nach rechts bewegt wird.

Die Funktionsweise der Anordnung gemäß den Fig. 6 und 7 entspricht der vorher beschriebenen, d.h. bei einer infolge von Verschleiß der Reibbeläge überschwelligen Rückverformung der Tellerfederhebel 22 zum Erreichen des kraftlosen Zustands wird das Schneckenrad 58 verdreht, wodurch sich der Tellerfederhebel 22 relativ zu dem Zuganker 74 verdreht und infolge der Relativbewegung Rampenflächen 76 und 78 zueinander eine Verschleißkompensation erfolgt.

Dadurch, dass die Speichen 32 der Antriebsfeder 34 zwischen den gewölbten Bereichen 82 der Federzungen 24 aufgenommen sind und diese axial nicht überragen, wird in axialer Richtung in relevanten Bauraumbereichen Platz mindestens in der Größenordnung der Blechstärke der Antriebsfeder gespart.

Dadurch, dass die einen Kraftrand für den Tellerfederhebel 22 bildenden Ansätze 84 bzw. Rampenflächen 76 im äußersten radialen Bereich des Tellerfederhebels 22 ausgebildet ist, hat der am Zuganker 74 angreifende Kraftrand des Tellerfederhebels 22 größtmögliche Länge, was bezüglich der entstehenden Spannungen in dem Tellerfederhebel 22 günstig ist. Das Schneckenrad ist ebenfalls platzsparend günstig und radial möglichst weit außen angeordnet, wodurch die Funktionalität ebenfalls günstig beeinflusst ist.

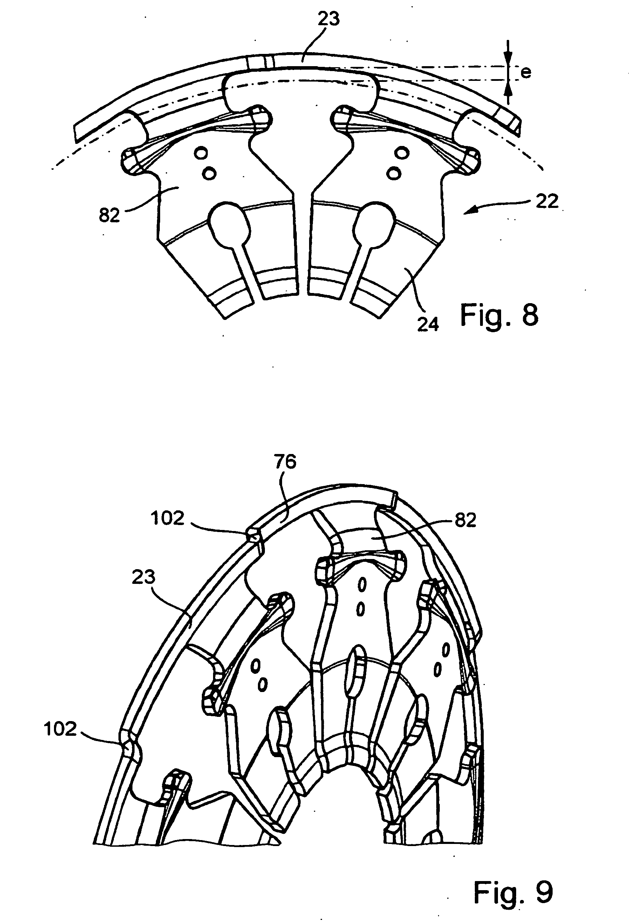

Eine alternative Ausführungsform des Tellerfederhebels 22 ist in Fig. 8 in Aussicht und in Fig. 9 perspektivisch dargestellt.

Bei dem Tellerfederhebel 22 gemäß Fig. 8 und 9 ist der Ringscheibenbereich 23 ähnlich wie bei der Ausführungsform gemäß Fig. 6 als ein in seiner radialen Erstreckung verhältnismäßig schmaler Ring ausgebildet, bildet jedoch im Gegensatz zur Ausführungsform gemäß Fig. 6 selbst die Rampenflächen 76, in dem der in Umfangsrichtung mit von der Seite der Antriebsfeder axial weggerichteten Stufen 102 ausgebildet ist, zwischen denen die schrägen Rampenflächen 76 verlaufen. Gegenüber der Ausführungsform gemäß Fig. 6 wird mit der Ausführungsform gemäß Fig. 9 in radialer Richtung Bauraum in der Größenordnung e (Fig. 8) gewonnen. Der Ringteil 36 der Antriebsfeder 34 kann bei der Ausführungsform gemäß Fig. 9 auf den vom Ringscheibenbereich 23 ausgehenden Teilen der gewölbten Bereiche 82 außerhalb von deren Scheiteln aufliegen.

Die beispielhaft beschriebene Konstruktion der Tellerfederhebelbaugruppe kann vielfältig abgeändert werden, wobei wesentlich ist, dass die Speichen der Antriebsfeder den Tellerfederhebel senkrecht zu dessen Achse gesehen, überlappen. Der Tellerfederhebel kann derart ausgebildet sein, dass sich die Rampenflächen und zumindest der radial äußere Bereich des Ringscheibenbereichs auf der von der Antriebsfeder abgewandten Seite einer durch die radial inneren Bereiche der Federzungen gebildeten Ebene befinden.

### Bezugszeichenliste

| | | | |
|---|---|---|---|
| 10 | Reibungskupplung | 66 | Klinke |
| 12 | Gehäuse | 68 | Schneckenrille |
| 14 | Gegendruckplatte | 70 | Gegenverzahnung |
| 16 | Anpressplatte | 72 | Bauteil |
| 18 | Reibbelag | 74 | Zuganker |
| 20 | Kupplungsscheibe | 76 | Rampenfläche |
| 22 | Tellerfederhebel | 78 | Rampenfläche |
| 23 | Ringscheibenbereich | 80 | Tellerfederhebelbaugruppe |
| 24 | Federzunge | 82 | gewölbter Bereich |
| 25 | äußerer Umfangsrand | 84 | Ansatz |
| 26 | innerer Umfangsrand | 86 | Ende |
| 28 | Betätigungsglied | 88 | Aussparung |
| 29 | Rampenfläche | 90 | Lasche |
| 30 | Rampenfläche | 92 | Haltebauteil |
| 31 | Nieten | 94 | Aussparung |
| 32 | Speichen | 96 | Rücken |
| 34 | Antriebsfeder | 98 | Verzahnung |
| 36 | Ringteil | 100 | Gegenbauteil |
| 38 | Distanzstück | 102 | Stufen |
| 42 | Spalt | | |
| 44 | Endbereich | | |
| 46 | Endbereich | | |
| 56 | Blattfederarm | | |
| 58 | Schneckenrad | | |
| 60 | Umfangsverzahnung | | |
| 62 | Mitnehmerverzahnung | | |
| 64 | Federarm | | |

## Patentansprüche

1. Tellerfederhebelbaugruppe zum Betätigen einer Reibungskupplung mit integriertem Verschleißausgleich, welche Tellerfederhebelbaugruppe einen Tellerfederhebel (22), eine Antriebsfeder (34) und ein Schneckenrad (58) enthält, wobei der Tellerfederhebel einen in Umfangsrichtung durchgehenden, radial äußeren Ringscheibenbereich (23) aufweist, von dem axial einwärts gerichtete Federzungen (24) ausgehen, und die Antriebsfeder einen mit einem radialen Spalt (42) versehenen Ringteil (36) aufweist, von dem radial einwärts gerichtete Speichen (32) ausgehen, die an den Federzungen befestigt sind, wobei ein an einer Seite des Spaltes befindlicher Endbereich (44) des Ringteils zumindest in Umfangsrichtung relativ zur Antriebsfeder festgelegt ist und das um ein zur Ebene des Tellerfederhebels etwa senkrechte Achse drehbar gelagerte Schneckenrad (58) trägt, das mit einer Umfangsverzahnung (60) ausgebildet ist und eine Schneckenrille (68) aufweist, die geeignet ist, bei einer Verdrehung des Schneckenrades eine Verschleißnachstellung zu bewirken, und der auf der anderen Seite des Spaltes befindliche Endbereich (46) des Ringteils mit einer Klinke (66) versehen ist, die mit der Umfangsverzahnung in in eine Drehbarkeitsrichtung des Schneckenrades bewegungsübertragendem Eingriff ist, und wobei die Anordnung der Antriebsfeder auf dem Tellerfederhebel derart ist, dass sich die Weite des Spaltes (42) bei einer konischen Verformung des Tellerfederhebels ändert, wodurch die Klinke (66) bei einer überschwelligen Verformung des Tellerfederhebels (22) eine Verdrehung des Schneckenrades (58) bewirkt, **dadurch gekennzeichnet, dass** die Federzungen (24) über zur Seite der Antriebsfeder (34) gewölbte Bereiche (82) in den Ringscheibenbereich (23) übergehen, die Speichen (32) der Antriebsfeder durch zwischen den gewölbten Bereichen der Federzungen ausgebildete Zwischenräume und/oder in den gewölbten Bereichen ausgebildete Aussparungen (88) verlaufen und der Ringteil (36) der Antriebsfeder radial außerhalb der Scheitel der gewölbten Bereiche auf dem Tellerfederhebel aufliegen.

2. Tellerfederhebelbaugruppe nach Anspruch 1, **dadurch gekennzeichnet, dass** das Schneckenrad (58) an einem starr mit dem Ringteil (36) verbundenen Haltebauteil (92) gelagert ist, das zumindest in Umfangsrichtung unbeweglich mit dem Tellerfederhebel (22) verbunden ist und an dem das Schneckenrad derart gelagert ist, dass es sich in einer Aussparung (94) der gewölbten Bereiche (82) des Tellerfederhebels (22) befindet.

3. Tellerfederhebelbaugruppe nach Anspruch 1 oder 2, **dadurch gekennzeichnet, dass** der Ringscheibenbereich (23) radial außen mit Rampenflächen (76) ausgebildet ist.

4. Tellerfederhebelbaugruppe nach Anspruch 1 oder 2, **dadurch gekennzeichnet, dass** der Ringscheibenbereich (23) als ein in Umfangsrichtung Rampenflächen (76) bildender Ring ausgebildet ist.

5. Selbstnachstellende Reibungskupplung, enthaltend eine Tellerfederhebelbaugruppe nach einem der Ansprüche 1 bis 4.

6. Selbstnachstellende Reibungskupplung enthaltend eine Tellerfederbaugruppe nach dem Ansprüchen 4 und 5, **dadurch gekennzeichnet, dass** die an der Tellerfeder (22) ausgebildeten Rampenflächen (76) an Rampenflächen (78) anliegen, die an einem mit einer Anpressplatte der Reibungskupplung verbundenen Zuganker (74) ausgebildet sind und die Schneckenrille (68) des Schneckenrades (58) in Eingriff mit einer Verzahnung (98) ist, die an einem gehäusefesten Gegenbauteil (100) ausgebildet ist.

7. Selbstnachstellende Reibungskupplung nach Anspruch 6, **dadurch gekennzeichnet, dass** sich der Tellerfederhebel (22) radial innerhalb der Rampenflächen (76) an dem gehäusefesten Gegenbauteil (100) abstützt.

## Claims

1. Plate spring lever assembly for actuating a friction clutch with integrated wear compensation, which plate spring lever assembly comprises a plate spring lever (22), a driving spring (34) and a worm gear (58), wherein the plate spring lever has a radially outer annular disc region (23) which is continuous in the circumferential direction and from which extend axially inwardly directed spring tongues (24), and wherein the driving spring has an annular part (36) which is provided with a radial gap (42) and from which extend radially inwardly directed spokes (32) which are fastened to the spring tongues, wherein an end region (44), which is situated on one side of the gap, of the annular part is fixed relative to the driving spring at least in the circumferential direction and supports the worm gear (58) which is mounted so as to be rotatable about an axis approximately perpendicular to the plane of the plate spring lever, which worm gear is formed with a circumferential toothing (60) and has a worm groove (68) suitable for effecting a wear adjustment in the event of a rotation of the worm gear, and that end region (46) of the annular part which is situated on the other side of the gap is provided with a pawl (66) which engages with the circumferential toothing for a transmission of movement in one direction of rotatability of the worm gear, and wherein the arrangement of the driving spring on the plate spring lever is such that the width of the gap (42) changes during a conical deformation of the plate spring lever, as a result of which the pawl (66) effects a rotation of the worm gear (58) in the event of a deformation of the plate spring lever (22) beyond a threshold, **characterized in that** the spring tongues (24) merge into the annular disc region (23) via regions (82) arched toward the side of the driving spring (34), the spokes (32) of the driving spring run through intermediate spaces formed between the arched regions of the spring tongues and/or through cutouts (88) formed in the arched regions, and the annular part (36) of the driving spring rests on the plate spring lever radially outside the apex of the arched regions.

2. Plate spring lever assembly according to Claim 1, **characterized in that** the worm gear (58) is mounted on a retaining component (92) which is rigidly connected to the annular part (36) and which is connected immovably at least in the circumferential direction to the plate spring lever (22) and on which the worm gear is mounted in such a way that the latter is situated in a cutout (94) of the arched regions (82) of the plate spring lever (22).

3. Plate spring lever assembly according to Claim 1 or 2, **characterized in that** the annular disc region (23) is formed with ramp surfaces (76) radially at the outside.

4. Plate spring lever assembly according to Claim 1 or 2, **characterized in that** the annular disc region (23) is formed as a ring which forms ramp surfaces (76) in the circumferential direction.

5. Self-adjusting friction clutch comprising a plate spring lever assembly according to one of Claims 1 to 4.

6. Self-adjusting friction clutch comprising a plate spring assembly according to Claims 4 and 5, **characterized in that** the ramp surfaces (76) formed on the plate spring (22) bear against ramp surfaces (78) which are formed on a tension anchor (74) connected to a pressure plate of the friction clutch, and the worm groove (68) of the worm gear (58) engages with a toothing (98) formed on a counterpart component (100) fixed with respect to a housing.

7. Self-adjusting friction clutch according to Claim 6, **characterized in that** the plate spring lever (22) is supported, radially within the ramp surfaces (76), against the counterpart component (100) fixed with respect to the housing.

## Revendications

1. Module de levier de ressort à disque pour l'actionnement d'un embrayage à friction à compensation de l'usure intégrée, lequel module de levier de ressort à disque contient un levier de ressort à disque (22), un ressort d'entraînement (34) et une roue à denture hélicoïdale (58), le levier de ressort à disque présentant une région de disque annulaire radialement extérieure (23) continue dans la direction périphérique, de laquelle partent des langues de ressort (24) orientées axialement vers l'intérieur, et le ressort d'entraînement présentant une partie annulaire (36) pourvue d'une fente radiale (42), de laquelle partent des rayons (32) orientés radialement vers l'intérieur, qui sont fixés sur les langues de ressort, une région d'extrémité (44) de la partie annulaire se trouvant d'un côté de la fente étant fixée au moins dans la direction périphérique par rapport au ressort d'entraînement et portant la roue à denture hélicoïdale (58) montée à rotation autour d'un axe approximativement perpendiculaire au plan du levier de ressort à disque, qui est réalisée avec une denture périphérique (60) et qui présente une gorge hélicoïdale (68) qui est appropriée pour provoquer un rajustement d'usure dans le cas d'une rotation de la roue à denture hélicoïdale, et la région d'extrémité (46) de la partie annulaire se trouvant de l'autre côté de la fente étant pourvue d'un cliquet (66) qui est en prise de transfert de mouvement avec la denture périphérique dans une direction de rotation de la roue à denture hélicoïdale, et l'agencement du ressort d'entraînement sur le levier de ressort à disque étant tel que la largeur de la fente (42) varie dans le cas d'une déformation conique du levier de ressort à disque, de sorte que le cliquet (66), dans le cas d'une déformation du levier de ressort à disque (22) au-delà d'un seuil, provoque une rotation de la roue à denture hélicoïdale (58), **caractérisé en ce que** les langues de ressort (24) se prolongent au-delà de régions (82) courbes vers le côté du ressort d'entraînement (34) dans la région de disque annulaire (23), les rayons (32) du ressort d'entraînement s'étendent à travers des espaces intermédiaires formés entre les régions courbes des langues de ressort et/ou à travers des évidements (88) réalisés dans les régions courbes, et la partie annulaire (36) du ressort d'entraînement repose radialement en dehors du sommet des régions courbes sur le levier de ressort à disque.

2. Module de levier de ressort à disque selon la revendication 1, **caractérisé en ce que** la roue à denture hélicoïdale (58) est montée sur un composant de fixation (92) connecté rigidement à la partie annulaire (36), qui est connecté au moins dans la direction périphérique de manière immobile au levier de ressort à disque (22) et sur lequel est montée la roue à denture hélicoïdale de telle sorte qu'elle se trouve dans un évidement (94) des régions courbes (82) du levier de ressort à disque (22).

3. Module de levier de ressort à disque selon la revendication 1 ou 2, **caractérisé en ce que** la région de disque annulaire (23) est réalisée radialement à l'extérieur avec des surfaces en rampe (76).

4. Module de levier de ressort à disque selon la revendication 1 ou 2, **caractérisé en ce que** la région de disque annulaire (23) est réalisée sous forme de bague formant des surfaces en rampe (76) dans la direction périphérique.

5. Embrayage à friction à rajustement automatique, contenant un module de levier de ressort à disque selon l'une quelconque des revendications 1 à 4.

6. Embrayage à friction à rajustement automatique contenant un module de levier de ressort à disque selon les revendications 4 et 5, **caractérisé en ce que** les surfaces en rampe (76) réalisées sur le ressort à disque (22) s'appliquent contre des surfaces en rampe (78) qui sont réalisées sur un tirant (74) connecté à un plateau de pression de l'embrayage à friction, et la gorge hélicoïdale (68) de la roue à denture hélicoïdale (58) est en prise avec une denture (98) qui est réalisée sur un composant conjugué (100) fixé au boîtier.

7. Embrayage à friction à rajustement automatique selon la revendication 6, **caractérisé en ce que** le levier de ressort à disque (22) s'appuie radialement à l'intérieur des surfaces en rampe (76) sur le composant conjugué (100) fixé au boîtier.
